# EUROPÄISCHE PATENTSCHRIFT

(11) **EP 3 184 357 B1**
(45) Veröffentlichungstag und Bekanntmachung des Hinweises auf die Patenterteilung: **20.11.2019**
(21) Anmeldenummer: 16202459.0
(22) Anmeldetag: 06.12.2016
(51) Int. Cl.: B60N 2/50, B62D 33/06, B60N 2/38, F16F 15/00, F16F 15/027

(54) **FEDERUNGSVORRICHTUNG UND VERFAHREN**
SUSPENSION DEVICE AND METHOD
SYSTÈME DE SUSPENSION ET PROCÉDÉ

(30) Priorität: 23.12.2015 DE 102015122777
(43) Veröffentlichungstag der Anmeldung: 28.06.2017
(73) Patentinhaber: GRAMMER AG, 92224 Amberg (DE)
(72) Erfinder: Kolb, Jens, 92281 Königstein (DE); Sonnleitner, Tobias, 90491 Nürnberg (DE)
(74) Vertreter: Hannke, Christian

(56) Entgegenhaltungen:
- EP-A1- 2 048 008
- EP-A2- 1 661 796
- WO-A1-99/24311
- JP-A- H04 243 613

## Beschreibung

Die Erfindung betrifft ein Nutzfahrzeug mit einer Federungseinheit, umfassend eine Steuereinheit, wobei das Nutzfahrzeug einen Karosserieboden aufweist, mit welchem eine erste und eine zweite Achse verbunden sind, wobei das Nutzfahrzeug mindestens einen mittels einer Federungsvorrichtung relativ zu dem Karosserieboden federbaren Fahrzeugsitz und/oder eine Fahrzeugkabine umfasst, wobei der Fahrzeugsitz und/oder die Fahrzeugkabine in einer Höhenrichtung gesehen im Wesentlichen über der zweiten Achse angeordnet ist.

Es sind aus dem Stand der Technik Federungseinheiten bekannt, wobei eine Federung und/oder eine Dämpfung der Federungseinheit in Abhängigkeit von erfassten Sensordaten verändert werden. Die Sensoren sind hierbei in der näheren Umgebung des Fahrzeugsitzes angeordnet, um so die Auswirkungen von äußeren Einflüssen auf den Fahrzeugsitz, beispielsweise beim Überfahren von Unebenheiten, bestimmen zu können. Es kann bisher jedoch nur mehr auf eine bereits fortgeschrittene Aktion des Fahrzeugsitzes bzw. der Fahrzeugkabine, beispielsweise eine Auslenkung des Sitzes/der Kabine, reagiert werden, insbesondere mit einer entsprechenden weiteren Signalverarbeitungszeit.

Es ist jedoch unvorteilhaft, eine Änderung der Federung bzw. der Dämpfung vorzunehmen, wenn bereits eine Auslenkung stattfindet. Denn überfährt das Fahrzeug eine Unebenheit, so werden bestimmte Sensordaten aufgenommen und diese dann dazu verwendet, die Federung bzw. Dämpfung einzustellen. Da jedoch eine gewisse Signalverarbeitungszeit hierzu notwendig ist, wird die Federungseinheit erst nach einer gewissen Zeit, also zeitverzögert zum Überfahren der Unebenheit, der Auslenkung aufgrund der Federungseinheit angepasst.

Derartige Nutzfahrzeuge mit Federungseinheiten sind der EP 1 661 796 A2, WO 99/24311 A1, JP H04 243613 A und EP 2 048 008 A1 zu entnehmen.

Die EP 1 661 796 A2 beschreibt eine Lagerung für eine Fahrzeugkabine, wobei die Fahrzeugkabine mittels Schwingungsdämpfungselementen eines ersten und eines zweiten Dämpfungssystems gegenüber einer Karosserie des Fahrzeugs gelagert ist.

WO 99/24311 A1 offenbart eine aktive Dämpfungsvorrichtung, bei welcher in Abhängigkeit von Sensordaten die Dämpfer entsprechend angepasst werden, um den auftretenden Kräften entgegenzuwirken.

JP H04 243613 A zeigt eine Dämpfereinstellung in Abhängigkeit der Geschwindigkeit des Fahrzeuges, wobei bei einer Feststellung einer nahenden Bodenunebenheit die Dämpfereinstellung auf weich gestellt wird.

EP 2 048 008 A1 offenbart eine Dämpfer- und/oder Federeinstellung eines Fahrzeugsitzes in Abhängigkeit einer Dämpfung und/oder Federung einer Karosserie.

Es ist demzufolge Aufgabe der vorliegenden Erfindung, ein Nutzfahrzeug mit einer Federungseinheit und ein Verfahren bereitzustellen, mittels welcher es möglich ist, die Federungsvorrichtung des Fahrzeugsitzes und/oder der Fahrzeugkabine bereits vor oder beim Überfahren einer Bodenunebenheit entsprechend anzupassen.

Diese Aufgabe wird gemäß den Merkmalen des Patentanspruches 1 und gemäß den Merkmalen des Patentanspruches 9 gelöst. Vorteilhafte Ausgestaltungen der Erfindung finden sich in den abhängigen Patentansprüchen.

Kerngedanke der Erfindung ist es, ein Nutzfahrzeug mit einer Federungseinheit, umfassend eine Steuereinheit, bereitzustellen, wobei das Nutzfahrzeug einen Karosserieboden aufweist, mit welchem eine erste und eine zweite Achse verbunden sind, wobei das Nutzfahrzeug mindestens einen mittels einer Federungsvorrichtung relativ zu dem Karosserieboden federbaren Fahrzeugsitz und/oder eine Fahrzeugkabine umfasst, wobei der Fahrzeugsitz und/oder die Fahrzeugkabine in einer Höhenrichtung gesehen im Wesentlichen über der zweiten Achse angeordnet ist, wobei mittels mindestens eines Sensors bei einem Überfahren einer Bodenunebenheit mit der ersten Achse ein Wert einer Auslenkung der ersten Achse durch die Bodenunebenheit ermittelbar ist, wobei mittels der Steuereinheit die Federungsvorrichtung des Fahrzeugsitzes und/oder der Fahrzeugkabine vor oder bei dem Überfahren der Bodenunebenheit mit der zweiten Achse veränderbar ist. Insbesondere ist die Federungsvorrichtung in Abhängigkeit des ermittelten Wertes der Auslenkung mittels der Steuereinheit veränderbar.

Erfindungsgemäß ist die Federungsvorrichtung durch die Kenntnis des ermittelten Wertes vorkonditionierbar bzw. veränderbar, das heißt die Federungsvorrichtung kann bereits vor oder bei einem Überfahren einer Bodenunebenheit, insbesondere einer Bodenunebenheit, mit der zweiten Achse entsprechend durch den ermittelten Wert und mittels der Steuereinheit beim Überfahren der Bodenunebenheit mit der ersten Achse verändert werden. Es handelt sich hierbei also insbesondere um eine aktive Steuerung bzw. Regelung der Federungsvorrichtung.

Insbesondere reagiert die zweite Achse im gleichen Verhältnis wie die erste Achse, sofern die zweite Achse insbesondere ab einer gewissen Geschwindigkeit die zweite Achse im Wesentlichen der Spur der ersten Achse folgt.

Unter einem Nutzfahrzeug ist ein Fahrzeug zu verstehen, das insbesondere im landwirtschaftlichen Bereich einsetzbar ist, wie beispielsweise ein Traktor oder eine selbstfahrende Arbeitsmaschine.

Da derartige Nutzfahrzeuge häufig auf Äckern zum Einsatz kommen, kommen die Nutzfahrzeuge oft in Kontakt mit verschiedenen Bodenunebenheiten, wie beispielsweise Erhöhungen oder Vertiefungen des Ackerbodens.

Diese Nutzfahrzeuge umfassen dabei natürlich einen Karosserieboden, mit welchem die erste und die zweite Achse verbunden sind. Vorzugsweise ist der Karosserieboden einteilig ausgebildet oder mittels mehrerer Bauteile ausgebildet, wobei die Bauteile starr miteinander verbunden sind. Die erste und die zweite Achse sind vorzugsweise die Radachsen des Nutzfahrzeuges, wobei die Räder bzw. Reifen des Fahrzeugs an der ersten und zweiten Achse angeordnet sind. Alternativ oder kumulativ ist es auch denkbar, dass jedes Rad des Fahrzeugs einzeln mittels einer Einzelradaufhängung mit der ersten Achse oder der zweiten Achse verbindbar ist.

Weiter ist der Fahrzeugsitz und/oder die Fahrzeugkabine im Wesentlichen in Höhenrichtung gesehen über der zweiten Achse angeordnet. Vorzugsweise handelt es sich bei der zweiten Achse um die Achse, die keine Lenkung aufweist. "Im Wesentlichen" bedeutet hierbei, dass die Abmessungen des Fahrzeugsitzes und/oder der Fahrzeugkabine deutlich größer sind als die Abmessungen der zweiten Achse, so dass lediglich ein Teil des Sitzes und/oder der Kabine über der zweiten Achse angeordnet ist. Die erste und die zweite Achse verlaufen vorteilhaft in eine Fahrzeugbreitenrichtung.

Überfährt das Nutzfahrzeug eine Bodenunebenheit mit der ersten Achse, so wird aufgrund der Krafteinwirkung durch die Bodenunebenheit die Achse ausgelenkt, also in ihrer Lage verändert. Dabei ist es unerheblich, ob die Bodenunebenheit auf das linke und das rechte Rad der ersten Achse wirkt oder nur auf eines der beiden Räder. Üblicherweise handelt es sich bei der ersten Achse eines Traktors oder dergleichen um eine gefederte Achse, so dass die durch die Bodenunebenheit erfahrene Auslenkung kompensiert werden kann. Bei der zweiten Achse hingegen handelt es sich meist um eine ungefederte Achse, so dass die Auswirkung der Bodenunebenheit auf die zweite Achse entsprechend ungefedert auf das Fahrzeug und demzufolge auf den Fahrzeugsitz bzw. die Fahrzeugkabine übertragen wird.

Weiter wird durch die Bodenunebenheit ein Hub und/oder ein Pendeln der ersten Achse hervorgerufen, wobei es sich im Falle einer Einzelradaufhängung um ein virtuelles Pendeln der ersten Achse handelt. Durch das Überfahren der Bodenunebenheit mit der ersten Achse wird zwar eine Anregung auch direkt auf den Fahrzeugsitz und/oder die Fahrzeugkabine übertragen, wobei jedoch die Anregung erheblich geringer ist als die Anregung durch das Überfahren der Bodenunebenheit mit der starren zweiten Achse. Erfindungsgemäß kann dieser Anregung schon vor dem Überfahren der Bodenunebenheit mit der zweiten Achse entgegengewirkt werden mittels der ermittelten Werte der ersten Achse und der Veränderung der Federungsvorrichtung vor oder beim Überfahren der Bodenunebenheit aufgrund des ermittelten Wertes mittels der Steuerungseinrichtung.

Der Wert der Auslenkung der ersten Achse wird mittels mindestens eines Sensors detektiert und vorzugsweise auch in einer Speichereinrichtung der Steuereinheit abgespeichert.

Gemäß einer bevorzugten Ausführungsform ist mittels der Steuereinheit der ermittelte Wert der Auslenkung mit einem vorgebbaren kritischen Wert vergleichbar, wobei mittels der Steuereinheit bei einem Überschreiten des kritischen Wertes die Federungsvorrichtung veränderbar ist.

Mittels der Steuereinheit kann der Wert der Auslenkung dabei mit einem vorgebbaren kritischen Wert verglichen werden. Unter dem kritischen Wert ist dabei die maximale Krafteinwirkung auf den Fahrzeugsitz und/oder die Fahrzeugkabine zu verstehen, die mittels der zugrunde liegenden passiven Federungsvorrichtung verarbeitet werden kann.

Wird der kritische Wert überschritten, so wird die Federungsvorrichtung aktiv gesteuert, um so eine kritische Krafteinwirkung auf den Fahrzeugsitz und dem darauf sitzenden Fahrzeugführer zu verhindern. Bei einem Überschreiten des kritischen Wertes ist davon auszugehen, dass der vorhandene Federweg der Federungsvorrichtung nicht mehr ausreichend ist, so dass die Federungsvorrichtung aktiv geregelt werden muss, um einen ausreichenden Federweg bereitstellen zu können. Dies betrifft sowohl den Federweg in horizontaler als auch in vertikaler Richtung.

Gemäß einer weiteren bevorzugten Ausführungsform ist mittels der Steuereinheit die Federungsvorrichtung kontinuierlich in Abhängigkeit von dem ermittelten Wert der Auslenkung veränderbar.

Im Allgemeinen wirkt eine Auslenkung der ersten Achse auf das Fahrzeug derart, dass das Fahrzeug und insbesondere die erste Achse beim Überfahren einer Bodenunebenheit ein Pendeln erfahren, das abhängig von der Rotation um eine Richtungsachse relativ zum Fahrzeug einem Nicken, einem Rollen oder auch einem Gieren der ersten Achse und entsprechend dem Fahrzeug entsprechen. Durch das Pendeln der ersten Achse und Überfahren der Bodenunebenheit mit der zweiten Achse erfährt auch die zweite Achse eine Pendelbewegung. Ein Pendeln der zweiten Achse hat insbesondere Auswirkungen auf die Horizontalfederung des Fahrzeugsitzes und/oder der Fahrzeugkabine, da eben eine Pendelbewegung des Sitzes bzw. der Kabine durch die Horizontalfederung aufgenommen wird.

Erfindungsgemäß ist durch ein Überfahren der Bodenunebenheit mittels der ersten Achse die gesamte Störungsinformation bekannt. Insbesondere kann mittels der Steuereinheit berechnet werden, wann das Fahrzeug mit der zweiten Achse die Bodenunebenheit überfährt. Hierzu ist es notwendig, dass der Wert des Radstandes, welcher als konstant angesehen wird, und die Geschwindigkeit des Fahrzeuges bekannt sind.

Zusätzlich zu der aktiven Regelung, also einer Zuführung einer Kraft oder einer aktiven Federkennlinienverstellung, wäre auch ein geregelter Dämpfer denkbar. Dabei kann mit dessen Entgegenwirken bereits mit Einsetzen der Anregung, also beim Überfahren einer Bodenunebenheit, und nicht erst nach Erfassung der Federung des Fahrzeugsitzes und/oder der Fahrzeugkabine begonnen werden. Dabei können der Bewegung entgegengerichtete Dämpferkräfte bei Beginn der Anregung eingeleitet werden. Vorteilhaft wird hierdurch ein Gewinn von zusätzlichem Federweg erreicht.

Gemäß einer bevorzugten Ausführungsform umfasst dabei die Federungsvorrichtung mindestens ein Federelement und mindestens ein Dämpferelement. Dabei kann das Dämpferelement als ein üblicher Einrohr- oder Zweirohrdämpfer ausgebildet sein, wobei auch andere Ausgestaltungsmöglichkeiten denkbar sind. Vorteilhaft ist das Federelement als eine Fluidfeder ausgebildet.

Gemäß einer weiteren bevorzugten Ausführungsform umfasst die Federungsvorrichtung mindestens ein Stellglied, welches elektrisch und/oder pneumatisch und/oder hydraulisch betätigbar ist. Mittels eines Stellglieds kann vorteilhaft die Federkennlinie der Federungsvorrichtung verändert werden. Insbesondere kann mittels des Stellglieds die Federungsvorrichtung aktiv geregelt werden, so dass erfindungsgemäß die Federungsvorrichtung entsprechend der Störungseinwirkung mittels der Steuereinheit veränderbar ist. Vorteilhaft kann es sich bei dem Stellglied um einen schlupfbehafteten Hydraulikzylinder handeln. Weiter vorteilhaft kann es sich bei dem Stellglied um eine Linearverstellung, insbesondere ohne Selbsthemmung, handeln.

Gemäß einer besonders bevorzugten Ausführungsform ist der mindestens eine Sensor an der ersten Achse angeordnet, so dass die Krafteinwirkung auf die erste Achse besonders vorteilhaft ermittelt werden kann. Weiter ist es vorteilhaft, wenn der mindestens eine Sensor ein Beschleunigungssensor und/oder ein Winkelsensor umfasst oder ausgebildet ist.

Ist ein Winkelsensor vorgesehen, so ist es durch diesen Sensor vorteilhafterweise möglich, die Pendelbewegung des Fahrzeuges bzw. der ersten Achse durch das Überfahren einer Bodenunebenheit zu ermitteln.

Es ist dabei vorteilhaft, wenn zumindest ein Beschleunigungssensor vorgesehen ist. Mittels eines Beschleunigungssensors ist es insbesondere möglich, die Stärke bzw. Intensität der Auslenkung der ersten Achse und dann entsprechend der zweiten Achse zu ermitteln. Alternativ oder kumulativ ist es denkbar, dass die Intensität mittels eines Gradienten eines Winkels oder mittels eines Wegesensors ermittelt werden kann. Der Winkel bezieht sich vorteilhaft auf den Winkel, den das Fahrzeug bzw. der Sitz bzw. die Kabine bei Überfahren erfährt. Je nach Änderung dieses Winkels kann die Intensität ermittelt werden.

Im Allgemeinen sind jedoch die Bewegungsgeschwindigkeit und die Bewegungsrichtung entscheidend. Dies geschieht durch Integration der Beschleunigungswerte oder durch Ableitung der Positionswerte.

Ein Lenkeinschlag kann durch die Stellung eines Lenkrads und einer dazu vorgesehenen Vorrichtung bestimmt werden. Durch den ermittelten Lenkeinschlag kann, vorteilhaft mittels der Steuereinheit, bestimmt werden, ob die zweite Achse und insbesondere die daran montierten Räder der Spur der ersten Achse folgt oder nicht. So kann ermittelt werden, ob die zweite Achse überhaupt die Bodenunebenheit überfährt.

Gemäß einer bevorzugten Ausführungsform kann mittels der Steuereinheit eine Geschwindigkeit des Nutzfahrzeugs bestimmt und/oder übertragen werden. Mittels der Geschwindigkeit des Fahrzeugs und eines Radstands, der üblicherweise bekannt ist, lässt sich mittels der Steuereinheit ermitteln, wann die Bodenunebenheit von der zweiten Achse überfahren wird. Dies ist auch möglich, wenn sich die Geschwindigkeit des Nutzfahrzeuges nach Überfahren der Bodenunebenheit mit der ersten Achse ändern sollte, entsprechend den üblichen Bewegungsgleichungen. Die Geschwindigkeit ist vorteilhaft mittels eines Getriebesteuergerätes oder durch Raddrehzahlsensoren ermittelt.

Gemäß einer besonders bevorzugten Ausführungsform umfasst die Federungsvorrichtung eine Vertikalfederung und eine Horizontalfederung. Es ist prinzipiell auch möglich, dass die Federungsvorrichtung nur eine Vertikalfederung oder nur eine Horizontalfederung aufweist, jedoch ist es besonders vorteilhaft, wenn sowohl eine Vertikalfederung als auch eine Horizontalfederung vorgesehen sind, so dass der Fahrzeugsitz und/oder die Fahrzeugkabine optimal gefedert werden können, wodurch ein besonders angenehmes Fahrgefühl möglich ist. Die Horizontalfederung ist vorteilhaft in der Lage, eine Federung des Fahrzeugsitzes und/oder der Fahrzeugkabine in Fahrzeuglängsrichtung und/oder in Fahrzeugbreitenrichtung bereitzustellen.

Gemäß einer bevorzugten Ausführungsform sind mittels der Steuereinheit eine aufgrund der Krafteinwirkung bei Überfahren der Bodenunebenheit resultierende Vertikalauslenkung und/oder eine resultierende Horizontalauslenkung des Fahrzeugsitzes und/oder der Fahrzeugkabine berechenbar. Vorzugsweise ist abhängig von der Vertikalauslenkung und/oder der Horizontalauslenkung die Federungsvorrichtung anpassbar. Vorteilhaft kann hierdurch auf einen Endanschlag verzichtet werden.

Gelöst wird die zugrunde liegende Aufgabe auch von einem Verfahren zum Federn eines Fahrzeugsitzes und/oder einer Fahrzeugkabine mittels einer Federungsvorrichtung relativ zu einem Karosserieboden.

Das erfindungsgemäße Verfahren umfasst dabei die Schritte: Überfahren einer Bodenunebenheit mit einer ersten Achse eines Nutzfahrzeugs; Aufnehmen von Sensordaten mittels mindestens eines Sensors und Ermitteln eines Wertes einer Auslenkung der ersten Achse; Berechnung einer resultierenden Auslenkung des Fahrzeugsitzes und/oder der Fahrzeugkabine mittels der Sensordaten durch eine Steuereinheit; Verändern der Federungsvorrichtung mittels der Steuereinheit vor oder beim Überfahren der Bodenunebenheit mit einer zweiten Achse des Nutzfahrzeugs. Vorteilhaft ist unter dem Verändern der Federungsvorrichtung ein aktives Regeln bzw. Steuern der Federungsvorrichtung mittels der Steuereinheit zu verstehen.

Gemäß einer bevorzugten Ausführungsform wird der Wert der berechneten Auslenkung mit einem vorgebbaren kritischen Wert der Auslenkung verglichen, wobei bei einem Überschreiten des kritischen Wertes die Federungsvorrichtung aktiv geregelt wird.

Gemäß einer weiteren bevorzugten Ausführungsform wird die Federungsvorrichtung kontinuierlich in Abhängigkeit des ermittelten Wertes der Auslenkung aktiv geregelt bzw. verändert.

Gemäß einer bevorzugten Ausführungsform werden zu der Berechnung der Auslenkung noch Werte der Geschwindigkeit v des Nutzfahrzeuges und gegebenenfalls der Lenkeinschlag verwendet.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: das Nutzfahrzeug beim Überfahren einer Bodenunebenheit mit einer ersten Achse;
- Fig. 1B: das Nutzfahrzeug beim Überfahren der Bodenunebenheit mit einer zweiten Achse;
- Fig. 2: aufgenommenes Sensorsignal;
- Fig. 3: Sensorsignale für die erste und die zweite Achse;
- Fig. 4: Aufbau eines Nutzfahrzeugs gemäß einer Ausführungsform;
- Fig. 5A: Sensorenanordnung gemäß einer Ausführungsform;
- Fig. 5B: Sensorenanordnung gemäß einer weiteren Ausführungsform;
- Fig. 6: Flussdiagramm eines möglichen Verfahrens;
- Fig. 7: Flussdiagramm eines weiteren möglichen Verfahrens.

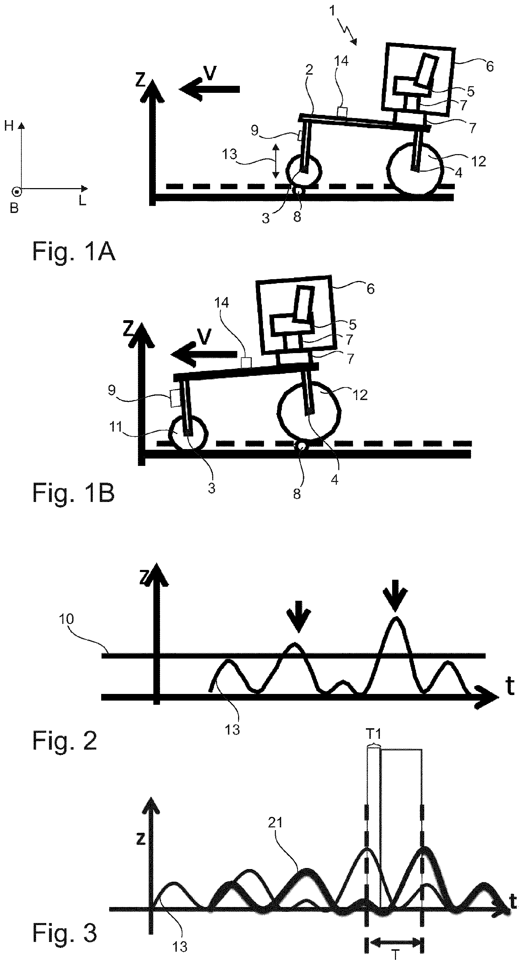

Die Figur 1A zeigt ein Nutzfahrzeug 1 mit einem Karosserieboden 2, an welchem eine erste Achse 3 und eine zweite Achse 4 angeordnet sind. Dabei sind weiter an der ersten Achse 3 ein erstes Rad 11 und an der zweiten Achse 4 ein zweites Rad 12 angeordnet. Natürlich sind pro Achse mindestens zwei Räder angeordnet, wobei in dieser schematischen Seitenansicht lediglich an jeder Achse 3, 4 ein Rad 11, 12 erkennbar ist. Die erste 3 sowie die zweite Achse 4 sind vorliegend in einer Breitenrichtung B verlaufend angeordnet. Vorliegend bewegt sich das Nutzfahrzeug 1 mit einer konstanten Geschwindigkeit v in Längsrichtung L vorwärts.

Weiter zeigt die Figur 1A die Situation, in der das Nutzfahrzeug 1 gerade eine Bodenunebenheit 8 mit der ersten Achse 3, insbesondere dem ersten Rad 11überfährt. Die einwirkende Kraft bzw. die Auslenkung 13 der ersten Achse 3 wird mittels eines Sensors 9 detektiert und an eine Steuereinheit 14 übermittelt. Diese Übermittelung kann dabei drahtgebunden oder drahtlos erfolgen.

Das Nutzfahrzeug 1 fährt nach Überfahren der Bodenunebenheit 8 vorliegend mit der konstanten Geschwindigkeit v weiter, so dass nach einer bestimmen Zeit T die zweite Achse, insbesondere das zweite Rad 12, die Bodenunebenheit 8 überfährt. Die Zeit T lässt sich mittels der bekannten Bewegungsgleichungen berechnen, wobei vorliegend die Zeit T mittels der Steuereinheit berechnet wird. Der zurückgelegte Weg zwischen erster 3 und zweiter Achse 4 entspricht dem bekannten Radstand.

Mittels der bekannten Bewegungsgleichungen ist es mittels der Steuereinheit 14 ebenso möglich, die benötigte Zeit T auch zu berechnen, wenn sich die Geschwindigkeit v des Nutzfahrzeugs nach Überfahren der Bodenunebenheit mit der ersten Achse 3 und vor dem Überfahren der Bodenunebenheit 8 mit der zweiten Achse 4 ändert.

Zur Berechnung umfasst vorteilhaft die Steuereinheit 14 einen Prozessor oder eine ähnliche Berechnungseinheit.

In der Figur 2 sind die von dem Sensor 9 aufgenommenen Werte der Auslenkung gezeigt. Darüber hinaus ist ein kritischer Wert der Auslenkung 10 gemäß einer ersten bevorzugten Ausführungsform gezeigt, wobei unterhalb dieses Werts keinerlei aktive Regelung der Federungsvorrichtung stattfindet, sondern lediglich eine passive Regelung. Überschreitet jedoch die Auslenkung den kritischen Wert 10, wie durch die Pfeile angedeutet, so ist es notwendig, eine aktive Veränderung der Federungsvorrichtung 7 durchzuführen. Abhängig von dem Aufbau der Federungsvorrichtung 7, also insbesondere abhängig von der Wahl der Dämpfer, der Federn und/oder der Stellglieder, kann ein anderer kritischer Wert vorgegeben werden. Ebenso ist es denkbar, abhängig vom Fahrkomfortverständnis und des Bedürfnisses des Fahrers den kritischen Wert 10 vorzugeben. Dies hängt ebenso von der Beschaffenheit des zu überfahrenden Geländes sowie des zur Verfügung stehenden Federwegs der Federungsvorrichtung 7 ab.

Die Figur 3 zeigt hierbei den Verlauf der Auslenkungen 13 wie in der Figur 2, jedoch sowohl für die erste Achse 3 als auch die zweite Achse 4, wobei die Auslenkung der zweiten Achse 4 mit dem Bezugszeichen 21 versehen ist. Da das Fahrzeug vorliegend mit einer konstanten Geschwindigkeit v über den Untergrund fährt, ist die Auslenkung 13 gegenüber der Auslenkung 21 lediglich um eine bestimmte Zeit T zeitverschoben. Falls das Nutzfahrzeug 1 mit einer Geschwindigkeit von 50 km/h fährt und einen Radstand von 3 m aufweist, so fährt das Nutzfahrzeug 1 mit der zweiten Achse 4 um 220 ms (gerundet) später über die Bodenunebenheit als die erste Achse 3.

Würde sich die Geschwindigkeit nach dem Überfahren der Bodenunebenheit ändern, so würde sich entsprechend natürlich auch die Zeit ändern. Bei einem konstanten Radstand von 3 m, ist für eine Geschwindigkeit von 10 km/h benötigte Zeit 1,1 s, für eine Geschwindigkeit von 30 km/h 370 ms.

Da die durchschnittliche Verarbeitungszeit T1 der Signale des Sensors bei etwa 20 ms liegt, kann die Steuereinheit eine der Auslenkung entsprechende Änderung der Federungsvorrichtung vornehmen, so dass beim Überfahren der Bodenunebenheit mit der zweiten Achse 4 der Fahrzeugsitz und/oder die Fahrzeugkabine bereits auf die einwirkende Auslenkung vorkonditioniert ist. Im Allgemeinen ist die Verarbeitungszeit T1 erheblich geringer als die Zeit T, mittels welcher angegeben werden kann, wann die zweite Achse 4 die Bodenunebenheit 8 überfährt.

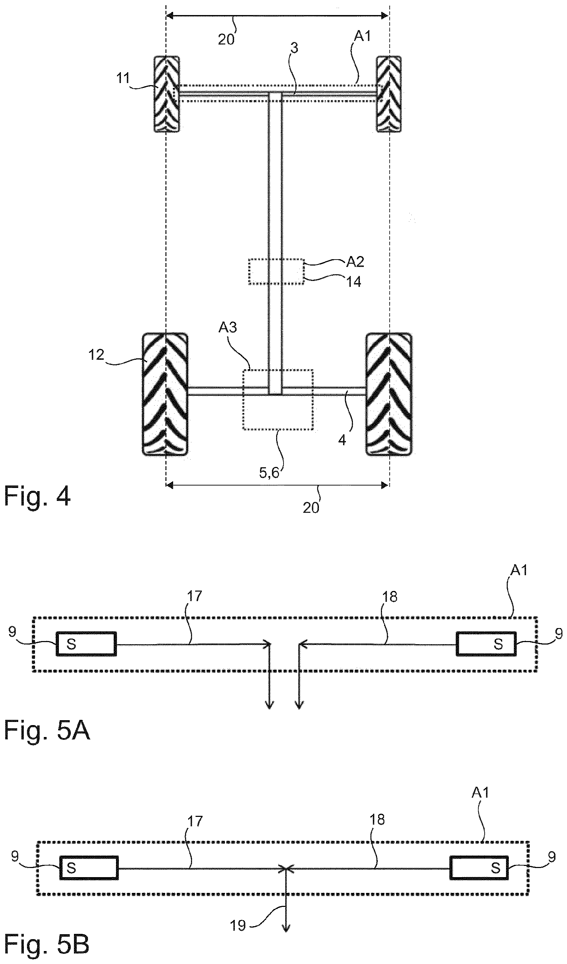

Die Figur 4 zeigt die bauliche Anordnung der ersten Achse 3, der Steuereinheit 14 und eines Fahrzeugsitzes 5, wobei natürlich auch eine Fahrzeugkabine 6 (hier nicht gezeigt) oder eine Kombination der beiden möglich ist. Wie zu erkennen ist, ist eine Spurbreite 20 der ersten Achse 3 gleich der Spurbreite 20 der zweiten Achse 4, so wie es insbesondere bei größeren Traktoren oder anderen landwirtschaftlichen Nutzfahrzeugen vorherrscht. Insbesondere kann hierdurch leichter ermittelt werden, ob die Spur der zweiten Achse 4 der ersten Achse 3 folgt.

Dabei umfasst die Baugruppe A1 die erste Achse 3 sowie die benötigten Sensoren, die Baugruppe A2 die Steuereinheit und die Baugruppe A3 den Fahrzeugsitz und die Federungsvorrichtung.

Es ist natürlich möglich, dass nur ein Rad 11 die Bodenunebenheit überfährt. Es ist daher vorteilhaft, mindestens zwei Sensoren 9 zu verwenden, die jeweils mit der ersten Achse 3 verbindbar sind. Vorteilhaft sind die Sensoren 9 an den Enden der ersten Achse 3 in ihrer Längserstreckung angeordnet. Handelt es sich jedoch um eine Einzelradaufhängung, so ist an jeder der Einzelachsen jeweils mindestens ein Sensor 9 angeordnet.

Die Figuren 5A und 5B zeigen dabei zwei verschiedene Ausführungsformen, wobei beide Ausführungsformen zwei Sensoren 9 aufweisen, die jeweils nahe einem Ende 15, 16 der ersten Achse 3 angeordnet sind. Bei den Sensoren 9 kann es sich um einen Beschleunigungssensor oder um einen Winkelsensor handeln. Auch ist es denkbar, dass sowohl Beschleunigungssensoren als auch Winkelsensoren verwendet werden.

In der Ausführungsform gemäß der Figur 5A werden die Signale 17, 18 der beiden Sensoren 9 jeweils separat abgegriffen und an die Steuereinheit 14 (hier nicht gezeigt) übermittelt.

In der Ausführungsform gemäß der Figur 5B werden die Signale 17, 18 der Sensoren 9 durch die Steuereinheit 14 gemittelt. Hierbei werden vorzugsweise die übermittelten Werte mit einem fahrzeugspezifischen Verstärkungsfaktor verrechnet.

Jedoch darf durch eine Mittelung der Signale 17, 18 keine Information verloren gehen. Handelt es sich dabei um Einzelradaufhängungen, so sind zwei Sensoren 9 an den Achsenden angeordnet. Berechnet werden hier die resultierende Vertikalauslenkung in der Mitte des Fahrzeuges sowie das resultierende Pendeln der ersten Achse 3, wobei hierdurch dann auf die Bewegung des Fahrzeuges 1, insbesondere beim Überfahren einer Bodenunebenheit 8 mit der zweiten Achse 4, geschlossen werden.

Handelt es sich andererseits um eine starre Achse, an der die Räder befestigbar sind, so wird die Auslenkung in der Mitte des Fahrzeuges ermittelt und das Pendeln der ersten Achse 3, vorteilhaft mittels eines Drehwinkelsensors, ermittelt.

Die Signale 17, 18 bzw. das gemittelte Signal 19 wird von der Steuereinheit 14 empfangen. Es versteht sich, dass die jeweiligen Bauteile Vorrichtungen zum Senden und Empfangen von Signalen aufweisen und zwischen den Bauteilen zum Übertragen von Signalen geeignete Verbindungen, beispielsweise Leitungen oder Kabel, angeordnet sind.

Mittels der Steuereinheit kann ebenfalls die Geschwindigkeit v des Nutzfahrzeugs ermittelt werden. Zusätzlich ist es denkbar, den Lenkeinschlag zu erfassen und aufzunehmen.

Die Ermittlung des Lenkeinschlags ist dahingehend sinnvoll, da damit und mit Hilfe der Fahrzeuggeometrie bestimmt werden kann, ob das zweite Rad, welches vorzugsweise in Längsrichtung gesehen hinter dem ersten Rad angeordnet ist, die Bodenunebenheit, die das erste Rad überfährt, auch von dem zweiten Rad überfahren wird oder das zweite Rad an der Unebenheit vorbeifährt.

Darüber hinaus ist es weiterhin sinnvoll, den Lenkeinschlag zu bestimmen, um die Auswirkungen der Bodenunebenheit auf die Horizontalfederung des Fahrzeugsitzes und/oder der Fahrzeugkabine zu bestimmen. Durch den Lenkeinschlag und mit der gefahrenen Geschwindigkeit des Fahrzeuges 1 werden zumindest eine Fliehkraft erzeugt, welche insbesondere auf die Horizontalfederung wirken und eine Horizontalauslenkung bewirken. Diese Fliehkraft hat jedoch einen geringeren Einfluss auf die Federungsvorrichtung als die Anregung durch das Überfahren einer Bodenunebenheit 8 durch die zweite Achse 4. Es ist daher erfindungsgemäß angedacht, den Hub und/oder das Pendeln der zweiten Achse vor oder bei dem Überfahren der Bodenunebenheit 8 zu bestimmen.

So ist es mittels der Steuereinheit dann möglich, die resultierende Vertikalauslenkung und die resultierende Horizontalauslenkung der Federungsvorrichtung und dementsprechend des Fahrzeugsitzes und/oder der Fahrzeugkabine zu berechnen.

Alternativ kann eine zweite Steuereinheit vorgesehen sein, die die Berechnung der Vertikalauslenkung und optional der Horizontalauslenkung übernimmt. Die erste Steuereinheit ermittelt dann lediglich die Geschwindigkeit und optional, falls benötigt, den Lenkeinschlag. Die Schaltung der Sensoren und der Steuereinheit, wenn die Steuereinheit die einzige Steuereinheit ist, ist dabei wie folgt. Die Sensoren übermitteln die aufgenommenen Werte, Signale oder dergleichen an die Steuereinheit und die Steuereinheit empfängt diese. Weiter ermittelt bzw. berechnet die Steuereinheit die Geschwindigkeit v des Fahrzeugs und optional den Lenkeinschlag. Die Steuereinheit berechnet dabei auch die resultierende Vertikal- und Horizontalauslenkung des Fahrzeugsitzes und/oder der Fahrzeugkabine und steuert dementsprechend die Federungsvorrichtung an, falls bei einem Vergleich der Auslenkung mit der kritischen Auslenkung ein Überschreiten festgestellt wurde. Wurde kein Überschreiten festgestellt, so wird die Federungsvorrichtung nicht angesteuert. Der Wert der Auslenkung entspricht der resultierenden Vertikalauslenkung und/oder Horizontalauslenkung. Bei der Ansteuerung der Federungsvorrichtung 7 handelt es sich um die Steuerung der Federung und/oder Dämpfung oder um eine aktive Steuerung der Federungsvorrichtung 7.

Der kritische Wert ist vorzugsweise derart gewählt, dass er dem maximalen Federweg der Federungsvorrichtung entspricht, also insbesondere dem maximalen Federweg in Vertikalrichtung und dem maximalen Federweg in Horizontalrichtung, falls eine Horizontalfederung vorhanden ist.

Vorzugsweise umfasst die Federungsvorrichtung des Fahrzeugsitzes und/oder der Fahrzeugkabine mindestens einen Dämpfer, mindestens ein Federelement und optional ein Stellglied, welches vorzugsweise mit dem Federelement verbindbar ist.

Bei dem mindestens einen Dämpfer kann es sich hierbei um einen handelsüblichen Dämpfer handeln, der beispielsweise als ein Einrohr- oder Zweirohrdämpfer ausgebildet ist. Das Federelement kann hierbei als eine Fluidfeder ausgebildet sein, wobei das Fluid vorzugsweise Luft ist. Mittels des Stellglieds ist es möglich, die Federeigenschaften des Federelements zu beeinflussen. Vorzugsweise kann auch die Höhe des Fahrzeugsitzes und/oder die Höhe der Fahrzeugkabine durch eine Veränderung der Fluidfeder durch das Stellglied verändert werden. Alternativ oder kumulativ kann durch das Stellglied die Federungsvorrichtung 7 aktiv geregelt werden. Das Stellglied kann hierbei elektrisch, pneumatisch oder hydraulisch ausgebildet sein.

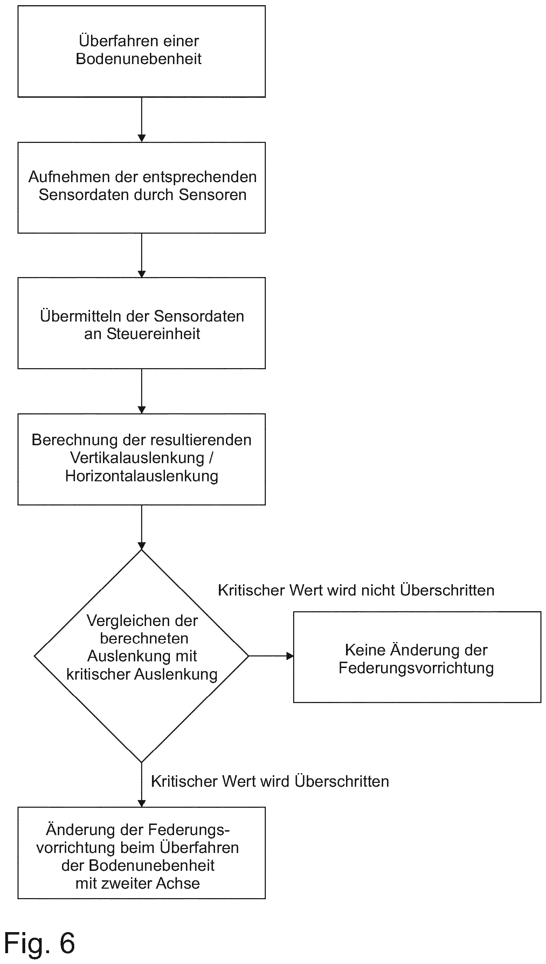

In der Figur 6 ist ein bevorzugter Verfahrensablauf mittels eines Flussdiagramms dargestellt. Es sind dabei natürlich auch andere oder weitere Verfahrensschritte denkbar. Die vorliegende Ausführungsform umfasst hierbei eine einzige Steuereinheit, wobei natürlich auch weitere Steuereinheiten denkbar sind.

In einem ersten Schritt überfährt die erste Achse 3 des Nutzfahrzeugs 1 eine Bodenunebenheit 8, wobei in einem nachfolgenden Schritt mittels mindestens eines Sensors 9 die Auswirkungen, insbesondere die Beschleunigung und die Amplitude der Anregung, aufnehmbar sind. In einem weiteren Schritt werden die vom Sensor 9 aufgenommenen Daten an die Steuereinheit 14 übermittelt, wobei die Steuereinheit 14 die Geschwindigkeit v des Nutzfahrzeugs 1 und gegebenenfalls einen Lenkeinschlag ermittelt.

Insbesondere werden die Werte der Geschwindigkeit und des Lenkwinkels übertragen und mit der kompletten Kenntnis der Bodenunebenheit die entsprechende Regelung mit Beginn der Anregung der zweiten Achse oder mit Beginn der resultierenden Sitz- und/oder Kabinenreaktion simultan gestartet oder bereits vor Beginn der Anregung der Sitz und/oder die Kabine aktiv vorkonditioniert bzw. vorgeregelt.

Aus diesen Werten werden eine resultierende Vertikalauslenkung und eine resultierende Horizontalauslenkung des Fahrzeugsitzes und/oder der Fahrzeugkabine berechnet und mit einem vorgebbaren kritischen Wert der Auslenkung verglichen. Wird der kritische Wert nicht überschritten, so reicht der vorhandene Federweg der Federungsvorrichtung aus, um eine Federung bzw. Dämpfung durchzuführen. Hierbei handelt es sich vorzugsweise um eine rein passive Federung bzw. Dämpfung.

Überschreitet hingegen der berechnete Wert den kritischen Wert, so wird eine entsprechende aktive Regelung der Federungsvorrichtung durchgeführt. Beispielsweise kann durch ein Stellglied die Kennlinie des Federelements verändert werden und/oder die Federungsvorrichtung 7 aktiv geregelt werden. Durch eine geeignete Änderung der Eigenschaften der Federungsvorrichtung derart, dass nun der vorhandene Federweg ausreichend ist, wird ein maximales Ausfedern des Fahrzeugsitzes und/oder der Fahrzeugkabine verhindert. Vorzugsweise wird die Änderung der Eigenschaften der Federungsvorrichtung dann vorgenommen, wenn das Nutzfahrzeug 1 mit der zweiten Achse 4 über die Bodenunebenheit 8 fährt, so dass bereits im Zeitpunkt des Überfahrens der Bodenunebenheit 8 mit der zweiten Achse eine optimal eingestellte Federungsvorrichtung vorliegt.

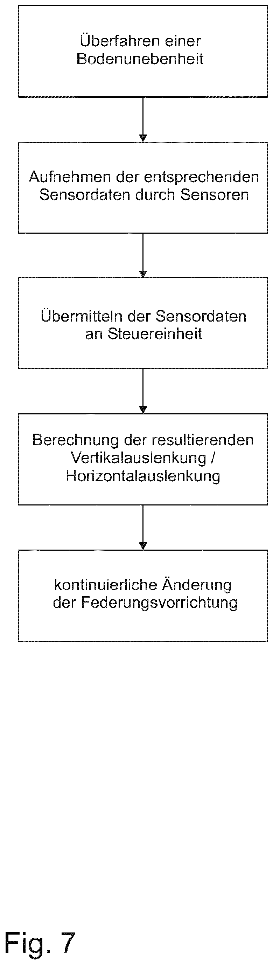

In der Figur 7 ist ein weiterer bevorzugter Verfahrensablauf mittels eines Flussdiagramms dargestellt. Es sind dabei natürlich auch andere oder weitere Verfahrensschritte denkbar. Die vorliegende Ausführungsform umfasst hierbei eine einzige Steuereinheit, wobei natürlich auch weitere Steuereinheiten denkbar sind.

In einem ersten Schritt überfährt die erste Achse 3 des Nutzfahrzeugs 1 eine Bodenunebenheit 8, wobei in einem nachfolgenden Schritt mittels mindestens eines Sensors 9 die Auswirkungen, insbesondere die Beschleunigung und die Amplitude der Anregung aufgenommen werden. In einem weiteren Schritt werden die vom Sensor 9 aufgenommenen Daten an die Steuereinheit 14 übermittelt, wobei die Steuereinheit 14 die Geschwindigkeit v des Nutzfahrzeugs 1 und gegebenenfalls einen Lenkeinschlag ermittelt.

Aus diesen Werten werden eine resultierende Vertikalauslenkung und eine resultierende Horizontalauslenkung des Fahrzeugsitzes und/oder der Fahrzeugkabine berechnet. Aufgrund dieser Berechnung kann nun mittels der Steuereinheit 14 die Federungsvorrichtung 7 der zweiten Achse 4 kontinuierlich an die Störungsinformation der ersten Achse 3 angepasst werden, so dass bereits vor oder bei einem Überfahren der Bodenunebenheit 8 die Federungsvorrichtung 7 geregelt wird, wobei es sich insbesondere um eine aktive Regelung handeln kann. Die Regelung der Federungsvorrichtung 7 kann dabei relativ zu dem ermittelten Wert durchgeführt werden, beispielsweise mittels einer Umrechnungsformel oder dergleichen.

### Bezugszeichenliste

- 1: Nutzfahrzeug
- 2: Karosserieboden
- 3: erste Achse
- 4: zweite Achse
- 5: Fahrzeugsitz
- 6: Fahrzeugkabine
- 7: Federungsvorrichtung
- 8: Bodenunebenheit
- 9: Sensor
- 10: kritischer Wert
- 11: erstes Rad
- 12: zweites Rad
- 13: Auslenkung
- 14: Steuereinheit
- 15: erstes Ende der ersten Achse
- 16: zweites Ende der ersten Achse
- 17: Signal
- 18: Signal
- 19: gemitteltes Signal
- 20: Spurbreite
- 21: Auslenkung
- L: Längsrichtung
- H: Höhenrichtung
- B: Breitenrichtung

## Patentansprüche

1. Nutzfahrzeug (1) mit einer Federungseinheit, umfassend eine Steuereinheit (14), wobei das Nutzfahrzeug (1) einen Karosserieboden (2) aufweist, mit welchem eine erste (3) und eine zweite Achse (4) verbunden sind, wobei das Nutzfahrzeug (1) mindestens einen mittels einer Federungsvorrichtung (7) relativ zu dem Karosserieboden (2) federbaren Fahrzeugsitz (5) und/oder eine Fahrzeugkabine (6) umfasst, wobei der Fahrzeugsitz (5) und/oder die Fahrzeugkabine (6) in einer Höhenrichtung (H) gesehen im Wesentlichen über der zweiten Achse (4) angeordnet ist,
**dadurch gekennzeichnet, dass**
die Federungseinheit mittels mindestens eines Sensors (9) bei einem Überfahren einer Bodenunebenheit (8) mit der ersten Achse (3) ein Wert einer Auslenkung (13) der ersten Achse (3) durch die Bodenunebenheit (8) ermittelbar ist, wobei mittels der Steuereinheit (14) die Federungsvorrichtung (7) des Fahrzeugsitzes (5) und/oder der Fahrzeugkabine (6) vor oder bei dem Überfahren der Bodenunebenheit (8) mit der zweiten Achse (4) veränderbar ist.

2. Nutzfahrzeug (1) nach Anspruch 1,
**dadurch gekennzeichnet, dass**
mittels der Steuereinheit (14) der ermittelte Wert der Auslenkung (13) mit einem vorgebbaren kritischen Wert (10) vergleichbar ist und mittels der Steuereinheit (14) bei einem Überschreiten des kritischen Wertes (10) die Federungsvorrichtung (7) veränderbar ist.

3. Nutzfahrzeug (1) nach Anspruch 1,
**dadurch gekennzeichnet, dass**
mittels der Steuereinheit (14) die Federungsvorrichtung (7) kontinuierlich in Abhängigkeit von dem ermittelten Wert der Auslenkung (13) veränderbar ist.

4. Nutzfahrzeug (1) nach einem der Ansprüche 1 bis 3,
**dadurch gekennzeichnet, dass**
der mindestens eine Sensor (9) an der ersten Achse (3) angeordnet ist und als ein Beschleunigungssensor und/oder Winkelsensor zur Ermittlung einer resultierenden Einfederung und/oder einer resultierenden Pendelbewegung der ersten Achse (3) ausgebildet ist.

5. Nutzfahrzeug (1) nach einem der Ansprüche 1 bis 4,
**dadurch gekennzeichnet, dass**
mittels der Steuereinheit (14) eine Geschwindigkeit des Nutzfahrzeugs (1) und optional der Lenkeinschlag ermittelbar ist.

6. Nutzfahrzeug (1) nach einem der Ansprüche 4 oder 5,
**dadurch gekennzeichnet, dass**
mittels der Steuereinheit (14) eine resultierende Vertikalauslenkung und eine resultierende Horizontalauslenkung des Fahrzeugsitzes (5) und/oder der Fahrzeugkabine (6) berechenbar ist und abhängig von der Vertikalauslenkung und/oder der Horizontalauslenkung die Federungsvorrichtung (7) anpassbar ist.

7. Nutzfahrzeug (1) nach einem der Ansprüche 1 bis 6,
**dadurch gekennzeichnet, dass**
die Federungsvorrichtung (7) mindestens ein Dämpferelement und mindestens ein Federelement umfasst.

8. Nutzfahrzeug (1) nach einem der Ansprüche 1 bis 7,
**dadurch gekennzeichnet, dass**
die Federungsvorrichtung (7) mindestens ein Stellglied umfasst, welches elektrisch und/oder pneumatisch und/oder hydraulisch betätigbar ist.

9. Verfahren zum Federn eines Fahrzeugsitzes (5) und/oder einer Fahrzeugkabine (6) mittels einer Federungsvorrichtung (7) relativ zu einem Karosserieboden(2),
**gekennzeichnet durch** die Verfahrensschritte:
a. Überfahren einer Bodenunebenheit (8) mit einer ersten Achse (3) eines Nutzfahrzeugs (1);
b. Aufnehmen von Sensordaten mittels mindestens eines Sensors (9) und Ermitteln eines Wertes einer Auslenkung der ersten Achse (3);
c. Berechnung einer resultierenden Auslenkung (13) des Fahrzeugsitzes (5) und/oder Fahrzeugkabine (6) mittels der Sensordaten durch eine Steuereinheit (14);
d. Verändern der Federungsvorrichtung (7) mittels der Steuereinheit (14) vor oder beim Überfahren der Bodenunebenheit (8) mit einer zweiten Achse (4) des Nutzfahrzeugs (1).

## Claims

1. Commercial vehicle (1) having a suspension unit, comprising a control unit (14), the commercial vehicle (1) having a body floor (2) by means of which a first (3) and a second axle (4) are connected, the commercial vehicle (1) comprising at least one vehicle seat (5) which can be suspended relative to the body floor (2) by means of a suspension device (7) and/or a vehicle cabin (6), the vehicle seat (5) and/or the vehicle cabin (6) being arranged substantially above the second axle (4) as viewed in a height direction (H), **characterised in that** the suspension unit when driving over an uneven surface (8) with the first axle (3), a value of a deflection (13) of the first axle (3) owing to the uneven surface (8) can be determined by means of at least one sensor (9), it being possible to modify the suspension device (7) of the vehicle seat (5) and/or of the vehicle cabin (6) by means of the control unit (14) before or whilst driving over the uneven surface (8) with the second axle (4).

2. Commercial vehicle (1) according to claim 1, **characterised in that** the determined value of the deflection (13) can be compared with a predeterminable critical value (10) by means of the control unit (14) and the suspension device (7) can be changed by means of the control unit (14) when the critical value (10) is exceeded.

3. Commercial vehicle (1) according to claim 1, **characterised in that** the suspension device (7) can be changed continuously by means of the control unit (14) depending on the determined value of the deflection (13).

4. Commercial vehicle (1) according to any of claims 1 to 3, **characterised in that** the at least one sensor (9) is arranged on the first axle (3) and is designed as an acceleration sensor and/or angle sensor for determining a resulting spring deflection and/or a resulting pendulum motion of the first axle (3).

5. Commercial vehicle (1) according to any of claims 1 to 4, **characterised in that** a speed of the commercial vehicle (1) and optionally the steering angle can be determined by means of the control unit (14).

6. Commercial vehicle (1) according to either claim 4 or claim 5, **characterised in that** a resulting vertical deflection and a resulting horizontal deflection of the vehicle seat (5) and/or of the vehicle cabin (6) can be calculated by means of the control unit (14) and the suspension device (7) can be adjusted depending on the vertical deflection and/or the horizontal deflection.

7. Commercial vehicle (1) according to any of claims 1 to 6, **characterised in that** the suspension device (7) comprises at least one damper element and at least one spring element.

8. Commercial vehicle (1) according to any of claims 1 to 7, **characterised in that** the suspension device (7) comprises at least one actuator, which can be operated electrically and/or pneumatically and/or hydraulically.

9. Method for suspending a vehicle seat (5) and/or a vehicle cabin (6) relative to a body floor (2) by means of a suspension device (7), **characterised by** the method steps of:
a. driving over an uneven surface (8) with a first axle (3) of a commercial vehicle (1);
b. recording sensor data by means of at least one sensor (9) and determining a value of a deflection of the first axle (3);
c. calculating a resulting deflection (13) of the vehicle seat (5) and/or vehicle cabin (6) by means of the sensor data using a control unit (14);
d. modifying the suspension device (7) by means of the control unit (14) before or whilst driving over the uneven surface (8) with a second axle (4) of the commercial vehicle (1).

## Revendications

1. Véhicule utilitaire (1) avec une unité de suspension, comportant une unité de commande (14), le véhicule utilitaire (1) présentant un plancher de carrosserie (2) auquel un premier (3) et un second (4) axes sont reliés, le véhicule utilitaire (1) comportant au moins un siège de véhicule (5) et/ou une cabine de véhicule (6) élastiquement sollicités par rapport au plancher de carrosserie (2) au moyen d'un dispositif de suspension (7), le siège de véhicule (5) et/ou la cabine de véhicule (6) étant disposés sensiblement au-dessus du second axe (4) vu dans une direction de la hauteur (H),
**caractérisé par le fait qu'**
au moyen d'au moins un capteur (9) lors d'un franchissement d'une inégalité du sol (8) par le premier axe (3), une valeur d'une déflexion (13) du premier axe (3) par l'inégalité du sol (8) est déterminable, où, au moyen de l'unité de commande (14), le dispositif de suspension (7) du siège de véhicule (5) et/ou de la cabine de véhicule (6) est modifiable avant ou lors du franchissement de l'inégalité du sol (8) par le second axe (4).

2. Véhicule utilitaire (1) selon la revendication 1,
**caractérisé par le fait qu'**
au moyen de l'unité de commande (14), la valeur déterminée de la déflexion (13) est comparable à une valeur critique prédéfinissable (10) et, au moyen de l'unité de commande (14), lors d'un dépassement de la valeur critique (10), le dispositif de suspension (7) est modifiable.

3. Véhicule utilitaire (1) selon la revendication 1,
**caractérisé par le fait qu'**
au moyen de l'unité de commande (14), le dispositif de suspension (7) est modifiable de façon continue en fonction de la valeur déterminée de la déflexion (13).

4. Véhicule utilitaire (1) selon l'une des revendications 1 à 3,
**caractérisé par le fait que**
ledit au moins un capteur (9) est disposé sur le premier axe (3) et est réalisé en tant que capteur d'accélération et/ou capteur d'angle pour la détermination d'un fléchissement résultant et/ou d'un mouvement pendulaire résultant du premier axe (3).

5. Véhicule utilitaire (1) selon l'une des revendications 1 à 4,
**caractérisé par le fait qu'**
au moyen de l'unité de commande (14), une vitesse du véhicule utilitaire (1) et facultativement le braquage sont déterminables.

6. Véhicule utilitaire (1) selon l'une des revendications 4 ou 5,
**caractérisé par le fait qu'**
au moyen de l'unité de commande (14), une déflexion verticale résultante et une déflexion horizontale résultante du siège de véhicule (5) et/ou de la cabine de véhicule (6) sont calculables et le dispositif de suspension (7) est ajustable en fonction de la déflexion verticale et/ou de la déflexion horizontale.

7. Véhicule utilitaire (1) selon l'une des revendications 1 à 6,
**caractérisé par le fait que**
le dispositif de suspension (7) comporte au moins un élément amortisseur et au moins un élément de ressort.

8. Véhicule utilitaire (1) selon l'une des revendications 1 à 7,
**caractérisé par le fait que**
le dispositif de suspension (7) comporte au moins un actionneur, lequel est actionnable électriquement et/ou pneumatiquement et/ou hydrauliquement.

9. Procédé pour la suspension d'un siège de véhicule (5) et/ou d'une cabine de véhicule (6) au moyen d'un dispositif de suspension (7) par rapport à un plancher de carrosserie (2),
**caractérisé par** les étapes de procédé:
a. franchissement d'une inégalité du sol (8) par un premier axe (3) d'un véhicule utilitaire (1);
b. enregistrement de données de capteur au moyen d'au moins un capteur (9) et détermination d'une valeur d'une déflexion du premier axe (3);
c. calcul d'une déflexion résultante (13) du siège de véhicule (5) et/ou de la cabine de véhicule (6) au moyen des données de capteur par une unité de commande (14);
d. modification du dispositif de suspension (7) au moyen de l'unité de commande (14) avant ou lors du franchissement de l'inégalité de sol (8) par le second axe (4) du véhicule utilitaire (1).
